# EUROPEAN PATENT APPLICATION

(11) **EP 4 827 146 A1**
(43) Date of publication of application: **21.10.2026**
(21) Application number: 24902566.9
(22) Date of filing: 27.11.2024
(51) Int. Cl.: H04W 24/02

(54) **SENSING SERVICE MANAGEMENT METHOD, AND TERMINAL AND BASE STATION**

(30) Priority: 15.12.2023 CN 202311731794
(71) Applicant: ZTE CORPORATION, Shenzhen, Guangdong 518057 (CN)
(72) Inventor: XIE, Zhenyi, Shenzhen, Guangdong 518057 (CN); DAI, Qian, Shenzhen, Guangdong 518057 (CN); WEI, Hao, Shenzhen, Guangdong 518057 (CN)
(74) Representative: Chimini, Francesco
(86) International application number: PCT/CN2024/135020
(87) International publication number: WO 2025/124144

(57) **Abstract**

Provided are a sensing service management method, a terminal and a base station. The method comprises: acquiring sensing configuration information broadcast by a second node; sending a sensing request to a second node according to the sensing configuration information; acquiring a contention resolution acknowledgment message fed back by the second node, wherein the contention resolution acknowledgment message is a result of the second node performing contention resolution according to the sensing request sent by at least one first node; and in a case where the contention resolution acknowledgment message includes indication information allowing the first node to send a sensing signal, sending the sensing signal to the second node.

## Description

### Cross-Reference to Related Application

The present disclosure claims the priority of Chinese Patent Application 2023117317944, filed on 15 December 2023 and entitled "Sensing Service Management Method, And Terminal and Base Station", the disclosure of which is incorporated herein by reference in its entirety.

### Technical Field

The present disclosure relates to the field of communications, and in particular to a sensing service management method, a terminal, and a base station.

### Background

With the continuous development of communication technologies, Integrated Sensing and Communication (ISAC) has gradually become one of the hot research topics. As a potential key technology for 6G, ISAC offers significant cost advantages, achieving the effect of radar target sensing mainly by means of software at the receiving end being compatible with communication technology, with only a small increase in hardware cost. It can be expected that ISAC will play a prominent role in future applications such as security and protection, low-altitude economy, virtual reality, and other fields.

According to the transmission mode differences of the sensing signals, the working modes of ISAC can be classified into several types: base station self-transmitting and self-receiving, inter-base station cooperative sensing, base station transmitting and terminal receiving, terminal transmitting and base station receiving, terminal self-transmitting and self-receiving, and inter-terminal cooperative sensing. The base station self-transmitting and self-receiving and inter-base station cooperative sensing modes are currently the main research focus in the industry. In an ISAC environment, since the number of terminals is generally much larger than the number of base stations, the working mode of terminal transmitting and base station receiving can achieve better diversity gains under large-scale conditions.

Regarding terminal sensing resource configuration schemes in ISAC, the typical industry application currently is resource configuration implemented after the establishment of a Radio Resource Control (RRC) connection, which mainly involves the redefinition of time-domain and frequency-domain configurations. The redefinition of time-domain configuration includes: radio frame structure, radio subframe, and Orthogonal Frequency Division Multiplexing (OFDM) symbols used for communication or sensing. The redefinition of frequency-domain configuration includes: distinction of Bandwidth Parts (BWP), and distinction of resource blocks within a BWP. The above sensing resource configuration schemes are mainly based on terminals after RRC connection establishment, and no design has been provided for the sensing schemes and resource configuration schemes for terminals in non-connected states.

In summary, regarding the problem in the related art that sensing resource configuration can only be performed for terminals in the RRC connected state, there is still no effective solution.

### Summary

Embodiments of the present disclosure provide a sensing service management method, a terminal, and a base station, so as to at least solve the problem in the related art that sensing resource configuration can only be performed for terminals in the RRC connected state.

According to one embodiment of the present disclosure, provided is a sensing service management method, which is applied to a first node. The method comprises: acquiring sensing configuration information broadcast by a second node; sending a sensing request to the second node according to the sensing configuration information; acquiring a contention resolution acknowledgment message fed back by the second node, wherein the contention resolution acknowledgment message is a result of the second node performing contention resolution according to the sensing request sent by at least one first node; and in a case where the contention resolution acknowledgment message includes indication information allowing the first node to send a sensing signal, sending the sensing signal to the second node.

According to another embodiment of the present disclosure, provided is a sensing service management method, which is applied to a second node. The method comprises: sending sensing configuration information by means of broadcasting; receiving a sensing request that is sent by at least one first node after receiving the sensing configuration information; performing contention resolution according to the sensing request of the at least one first node, and respectively sending the contention resolution acknowledgment message to the at least one first node according to a contention resolution result; and receiving sensing signals sent by one or more first nodes, wherein the sensing signals are sent to the second node by the first nodes upon reception of a contention resolution acknowledgment message comprising indication information allowing the first node to send the sensing signal.

According to another embodiment of the present disclosure, provided is a terminal, configured to perform sensing service management according to the steps in any method embodiment applied to the first node.

According to another embodiment of the present disclosure, provided is a base station, configured to perform sensing service management according to the steps in any method embodiment applied to the second node.

According to another embodiment of the present disclosure, a computer readable storage medium is further provided, the storage medium stores a computer program, wherein the computer program is configured to execute, when being run by the processor, the operations in any one of the described method embodiments.

According to another embodiment of the present disclosure, further provided is an electronic device, comprising a memory and a processor, wherein the memory stores a computer program, and the processor is configured to run the computer program to execute the steps in any one of the method embodiments.

### Brief Description of the Drawings

Fig. 1 is a hardware structure block diagram of a sensing service management method according to an embodiment of the present disclosure;
Fig. 2 is a flowchart (1) of a sensing service management method according to an embodiment of the present disclosure;
Fig. 3 is a flowchart (2) of a sensing service management method according to an embodiment of the present disclosure;
Fig. 4 is an overall flowchart of a sensing service management method according to an embodiment of the present disclosure;
Fig. 5 is a sensing service flowchart of a non-connected terminal sensing a sensing signal according to an embodiment of the present disclosure;
Fig. 6 is a schematic diagram (1) of sensing service resource configuration according to an embodiment of the present disclosure;
Fig. 7 is a schematic diagram (2) of sensing service resource configuration according to an embodiment of the present disclosure;
Fig. 8 is a schematic diagram (3) of sensing service resource configuration according to an embodiment of the present disclosure;
Fig. 9 is a schematic diagram (4) of sensing service resource configuration according to an embodiment of the present disclosure;
Fig. 10 is a schematic diagram (5) of sensing service resource configuration according to an embodiment of the present disclosure.

### Detailed Description of the Embodiments

The embodiments of the present disclosure are described in detail with reference to the accompanying drawings and in conjunction with the embodiments.

It should be noted that the terms "first", "second" etc. in the description, claims, and accompanying drawings of the present disclosure are used to distinguish similar objects, and are not necessarily used to describe a specific sequence or order.

The present disclosure relates to two types of entities, i.e. a first node and a second node. The first node may be a terminal, such as a mobile terminal or a computer terminal. The first node may also be a vehicle-mounted communication module, a drone communication module, or other devices capable of sending sensing signals. The second node may be a base station, such as a macro station of a cellular network, and an access node of a distributed unit. The second node may configure the sensing resource of the first node, and receive the sensing information reported by the first node.

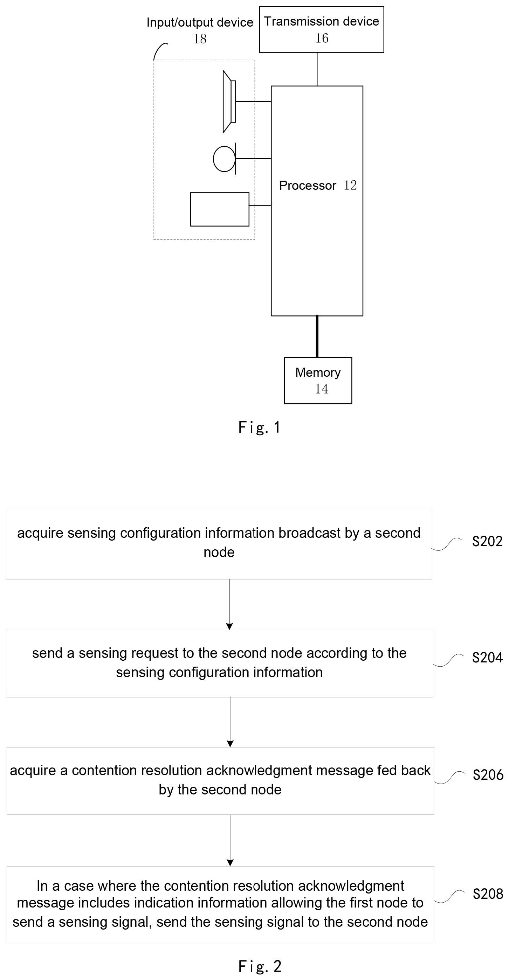

The method embodiments provided in the embodiments of the present disclosure may be executed in a terminal, a base station or a similar operation device. Taking an operation on a mobile terminal as an example, Fig. 1 is a hardware structure block diagram of a sensing service management method according to an embodiment of the present disclosure; as shown in Fig. 1, the hardware board may include one or more (only one is shown in Fig. 1) processors 12 (the processors 12 may include, but are not limited to, a microprocessor MCU or a processing device such as a programmable logic device) and a memory 14 configured to store data, wherein the mobile terminal can further include a transmission device 16 for a communication function and an input/output device 18. Those ordinarily skilled in the art can appreciate that the structure shown in Fig. 1 is for illustrative purposes only, but not limit the structure of the mobile terminal. For example, the mobile terminal may also include more or fewer components than that shown in Fig. 1, or have a different configuration than that shown in Fig. 1.

The memory 14 may be configured to store a computer program, for example, a software program and a module of application software, such as a computer program corresponding to the sensing service management method in the embodiments of the present application. The processor 12 runs the computer program stored in the memory 14, so as to execute various function applications and the sensing service management method, that is, to implement the foregoing method. The memory 14 may include a high-speed random access memory, and may also include a non-transitory memory, such as one or more magnetic storage apparatuses, flash memories, or other non-transitory solid-state memories. In some embodiments, the memory 14 may further include memories remotely arranged with respect to the processor 12, and these remote memories may be connected to the mobile terminal over a network. Examples of the network above includes, but is not limited to, an Internet, intranets, a local area network, a mobile communication network, and combinations thereof.

The transmission device 16 is configured to receive or transmit data by a network. Specific examples of the described network may include a wireless network provided by a communication provider. In an example, the transmission device 16 may include a network interface controller (NIC) that may be coupled to other network devices by a base station, so as to communicate with the Internet. In an example, the transmission device 16 can be a radio frequency (RF) module for communicating wirelessly with the Internet.

Provided is a sensing service management method, which is applied to a first node. Fig. 2 is a flowchart (1) of a sensing service management method according to an embodiment of the present disclosure. As shown in Fig. 2, the flow comprises the following steps:
step S202: sensing configuration information broadcast by a second node is acquired;
Step S204: a sensing request is sent to the second node according to the sensing configuration information;
step S206: a contention resolution acknowledgment message fed back by the second node is acquired, wherein the contention resolution acknowledgment message is a result of the second node performing contention resolution according to the sensing request sent by at least one first node; and
step S208: in a case where the contention resolution acknowledgment message includes indication information allowing the first node to send a sensing signal, the sensing signal is sent to the second node.

In the embodiments of the present disclosure, by means of step S202 to step S208, sensing resource configuration can be performed for terminals in the non-connected state by means of broadcasting, realizing sensing service management for terminals in the non-connected state, and thereby solving the problem in the related art that sensing resource configuration is only possible for terminals in an RRC connected state, and expands the applicable scope of sensing services. Furthermore, contention resolution can prevent a plurality of nodes from using the same sensing resource, thereby ensuring the normal reception of the sensing signal.

In some embodiments, step S202 of acquiring the sensing configuration information broadcast by the second node may include the following steps:
step S2022: a broadcast message sent by the second node is searched for on the basis of pre-configured broadcast configuration information;
step S2024: the broadcast message is demodulated to obtain a sensing configuration which comprises at least one piece of sensing configuration information; and
step S2026: one piece of the sensing configuration information is selected from the sensing configuration on the basis of a sensing capability of the first node.

In the present embodiment, step S2022 may be performed by blind search, or may be performed by searching in designated time-frequency resources on the basis of pre-configured broadcast configuration information. Blind search is generally used to search for available signals or devices within unknown frequency ranges.

In the present embodiment, the sensing configuration in step S2024 generally refers to all resources acceptable to the second node (such as a base station). If the sensing configuration contains multiple pieces of sensing configuration information, it means that the second node can simultaneously support sensing integrated services for multiple terminals. However, to avoid conflicts in communication resources, each piece of sensing configuration information can only be used by one terminal.

In some embodiments, the sensing configuration information may only include sensing request configuration information, wherein the sensing request configuration information is used for instructing the first node to send the sensing request on a corresponding resource configuration.

In some embodiments, the sensing configuration information may only comprise the sensing request configuration information and contention resolution configuration information, wherein the contention resolution configuration information is used for instructing the first node to receive the contention resolution acknowledgment message on a corresponding resource configuration.

In some embodiments, the sensing configuration information may include the sensing request configuration information, the contention resolution configuration information and the sensing signal configuration information simultaneously, wherein the sensing signal configuration information is used for instructing the first node to send the sensing signal on a corresponding resource configuration.

In the present embodiment, within the same piece of the sensing configuration information, there is a mapping relationship between the sensing request configuration information, the contention resolution configuration information and the sensing signal configuration information. In addition, there is also the same mapping relationship between the sensing request configuration information, the contention resolution configuration information, and the sensing signal configuration information which are used by each terminal.

In some embodiments, in step S2026, in a case where the first node supports the sensing service, sensing configuration information that meets its own communication requirements may be selected; and if there are multiple pieces of information meeting the requirements, a piece of information can be selected at random, and the second node (e.g. a base station) is requested to use the sensing configuration information.

In some embodiments, step S204 may comprise: sending the sensing request on a resource configuration corresponding to the sensing request configuration information, wherein the sensing request is used for requesting the second node to allow the first node to send the sensing signal.

In some embodiments, if the sensing configuration information received from the broadcast does not include complete sensing request configuration information, contention resolution configuration information, and sensing signal configuration information, before step S204, step S203 may further be performed to determine other sensing configuration information expected by the first node.

In some embodiments, before step S204, the method can further comprise step S203A: in a case where the sensing configuration information only comprises the sensing request configuration information, , the contention resolution configuration information expected by the first node is determined on the basis of the sensing capability of the first node and the mapping relationship.

In some embodiments, before step S204, the method can further comprise step S203B: in a case where the sensing configuration information only comprises the sensing request configuration information, the competition solution configuration information and the sensing signal configuration information which are expected by the first node are determined on the basis of the sensing capability of the first node and the mapping relationship.

In some embodiments, before step S204, the method can further comprise step S203C: in a case where the sensing configuration information only comprises the sensing request configuration information and the contention resolution configuration information, the sensing signal configuration information expected by the first node is determined on the basis of the sensing capability of the first node and the mapping relationship.

In some embodiments, step S206 may comprise: acquiring, according to the contention resolution configuration information, the contention resolution acknowledgment message fed back by the second node.

In some embodiments, acquiring, according to the contention resolution configuration information, the contention resolution acknowledgment message fed back by the second node may further comprise: receiving the contention resolution acknowledgment message on a resource configuration corresponding to the contention resolution configuration information, wherein the contention resolution acknowledgment message comprises one of the following: indication information allowing the first node to send the sensing signal, and indication information not allowing the first node to send the sensing signal.

In the present embodiment, a plurality of first nodes may request to use the same resource, and the second node performs contention resolution for a plurality of nodes that select the same resource, so as to ensure that resource is allowed to be used by only one node.

In some embodiments, in a case where the sensing configuration information only comprises the sensing request configuration information, the sensing request further carries the contention resolution configuration information expected by the first node; in a case where the sensing configuration information only comprises the sensing request configuration information and where the contention resolution acknowledgment message carries indication information allowing the first node to transmit the sensing signal, the contention resolution acknowledgment message further carries the sensing signal configuration information allocated to the first node by the second node during contention resolution. Specifically, the contention resolution configuration information may be determined by the first node by means of step S203A, and the sensing signal configuration information is determined by the second node by means of contention resolution.

Further, If the second node does not allow the first node to send a sensing signal during contention resolution, the contention resolution acknowledgment message received by the first node will not carry corresponding sensing signal configuration information.

In some embodiments, in a case where the sensing configuration information only comprises the sensing request configuration information, the sensing request further carries the contention resolution configuration information and the sensing signal configuration information which are expected by the first node. Specifically, the contention resolution configuration information and the sensing signal configuration information may be determined by the first node by means of step S203B.

In some embodiments, in a case where the sensing configuration information only comprises the sensing request configuration information and the contention resolution configuration information, the sensing request further carries the sensing signal configuration information expected by the first node. The sensing signal configuration information may be determined by the first node by means of step S203C.

In some embodiments, in a case where the sensing configuration information only includes the sensing request configuration information and the contention resolution configuration information, and where the contention resolution acknowledgment message carries indication information allowing the first node to send the sensing signal, the contention resolution acknowledgment message further carries the sensing signal configuration information allocated to the first node by the second node during contention resolution. Specifically, the sensing signal configuration information is determined by the second node by means of contention resolution.

Further, If the second node does not allow the first node to send a sensing signal during contention resolution, the contention resolution acknowledgment message received by the first node will not carry corresponding sensing signal configuration information.

In some embodiments, the broadcast configuration information comprises at least one of:
a time-domain configuration of the broadcast message, comprising: a repetition period, a slot index within a frame or subframe, a starting symbol, and the number of symbols;
a frequency-domain configuration of the broadcast message, comprising: a starting resource block index and the number of resource blocks;
a code-domain configuration of the broadcast message, comprising: a reference signal code-domain index and a data signal code-domain index;
a spatial-domain configuration of the broadcast message, comprising: a beam index and a partition region index;
a sensing service type information configuration, comprising: a large amount of time-domain occupation, a large amount of frequency-domain occupation and/or a large amount of space domain occupation;
a sensing signal type information configuration, comprising: orthogonal frequency division multiplexing (OFDM), orthogonal time-frequency space (OTFS) and/or frequency modulation continuous wave (FMCW);
an environment condition reporting configuration, comprising: reporting a signal to interference plus noise ratio (SINR), reporting reference signal received power (RSRP) and/or reporting GPS.

In some embodiments, the sensing configuration comprises: a time-domain configuration and a frequency-domain configuration, wherein the time-domain configuration comprises a time-domain offset, a starting symbol, and the number of symbols; the frequency-domain configuration comprises a start resource block index and the number of resource blocks.

In some embodiments, the sensing configuration further comprises a code-domain configuration, wherein the code-domain configuration comprises a code-domain index.

In the embodiments of the present disclosure, the time-domain configuration and the frequency-domain configuration are necessary configurations, while the code-domain configuration is an important configuration. The number of code-domain configurations determines the maximum number of sensing resources that can be accommodated for terminals in the non-connected state to send sensing signals.

In some embodiments, the sensing request configuration information may specifically include:
a time-domain configuration of the sensing request, comprising: a first time-domain offset Tr relative to a broadcast message, a starting symbol of the sensing request, and the number of symbols of the sensing request;
a frequency-domain configuration of the sensing request, comprising: a starting resource block index of the sensing request, and the number of resource blocks of the sensing request;
a code-domain configuration of the sensing request, comprising a code-domain index random selection list or a code-domain index logic selection list.

In some embodiments, after step S2026 of selecting, on the basis of a sensing capability of the first node, one piece of the sensing configuration information from the sensing configuration, the method further comprises: randomly selecting one code-domain index from the code-domain index random selection list as the code-domain index of the first node; or, searching, on the basis of the signal quality of the broadcast message, for a corresponding code-domain index from the code-domain index logic selection list as the code-domain index of the first node.

In some embodiments, the contention resolution configuration information may specifically include: a time-domain configuration of the contention resolution acknowledgment message, comprising: a second time-domain offset TAN relative to the sensing request, a starting symbol of the contention resolution acknowledgment message, and the number of symbols of the contention resolution acknowledgment message;
a frequency-domain configuration of the contention resolution acknowledgment message, comprising: a starting resource block index of the contention resolution acknowledgment message, and the number of resource blocks of the contention resolution acknowledgment message;
a code-domain configuration of the contention resolution acknowledgment message, comprising: a code-domain index of a reference signal of the contention resolution acknowledgment message, and a code-domain index of a data signal of the contention resolution acknowledgment message. In some embodiments, the sensing signal configuration information may specifically include:
   a time-domain configuration of the sensing signal, comprising: a third time-domain offset TS relative to the contention resolution acknowledgment message, a starting symbol of the sensing signal, the number of symbols of the sensing signal, a starting slot index of the sensing signal, the number of slots of the sensing signal, and the number of slot repetitions of the sensing signal;
   a frequency-domain configuration of the sensing signal, comprising: a starting resource block index of the sensing signal, the number of resource blocks of the sensing signal, and an effective sensing bandwidth of the sensing signal; and
   a code-domain configuration of the sensing signal, comprising: a code-domain index of the sensing signal.

In some embodiments, the time-domain configuration of the sensing signal further comprises at least one of the following: a symbol duty cycle of the sensing signal, the number of symbol repetitions of the sensing signal, a slot duty cycle of the sensing signal, a length of the sensing signal, and a time-domain sampling duty cycle of the sensing signal.

In some embodiments, the sensing configuration further comprises classification information and/or condition information, wherein the classification information comprises at least one of a sensing signal type, a service type and an architecture type; and the condition information comprises at least one of a terminal capability, a terminal location and a signal strength.

Further, on the basis of the described classification information or condition information and its own capability, the first node may determine whether a corresponding sensing service can be supported. The first node may send a sensing request only if its capabilities support the corresponding sensing service; if the first node does not support it, the broadcast message may be ignored and no sensing request is sent.

In some embodiments, the sensing configuration further comprises a spatial-domain configuration, wherein the spatial-domain configuration is used in cooperation with the time-domain configuration, the frequency-domain configuration and the code-domain configuration, and the spatial-domain configuration comprises a broadcast beam index and a partition region index.

In the present embodiment, the spatial-domain configuration is an optional configuration. For example, the spatial-domain configuration may include spatial-domain filters pointing to different directions at different time (frames, slots, symbols, time-domain sampling points); The spatial-domain configuration may also include, in a carrier aggregation scheme, spatial-domain filters of different carriers covering different regions.

In some embodiments, the sensing request carries capability information of the first node and/or GPS position information of the first node. Further, when performing contention resolution, the second node may refer to the information reported in the sensing request, for example, by selecting the first node with the closest distance to perform reporting of the sensing service.

By means of the embodiments of the present disclosure, first nodes in the non-connected state can also acquire a sensing configuration from a broadcast message, so as to solve the problem in the related art that sensing resource configuration is only possible for terminals in an RRC connected state, and expand the applicable scope of sensing services. Furthermore, contention resolution can prevent a plurality of nodes from using the same sensing resource, thereby ensuring the normal reception of the sensing signal.

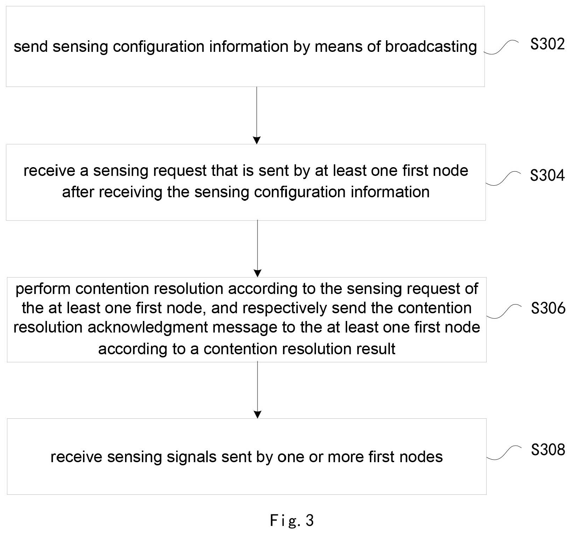

An embodiment of the present disclosure provides a sensing service management method, which is applied to a second node. Fig. 3 is a flowchart (2) of a sensing service management method according to an embodiment of the present disclosure. As shown in Fig. 3, the flow includes the following steps:
step S302: sensing configuration information is sent by means of broadcasting;
step S304: a sensing request that is sent by at least one first node after receiving the sensing configuration information is received;
step S306: contention resolution is performed according to the sensing request of the at least one first node, and the contention resolution acknowledgment message is respectively sent to the at least one first node according to a contention resolution result; and
step S308: sensing signals sent by one or more first nodes are received, wherein the sensing signals are sent to the second node by the first nodes upon reception of a contention resolution acknowledgment message comprising indication information allowing the first node to send the sensing signal.

In the embodiments of the present disclosure, by means of step S302 to step S308, sensing resource configuration can be performed for terminals in the non-connected state by means of broadcasting, realizing sensing service management for terminals in the non-connected state, and thereby solving the problem in the related art that sensing resource configuration is only possible for terminals in an RRC connected state, and expands the applicable scope of sensing services. Furthermore, contention resolution can prevent a plurality of nodes from using the same sensing resource, thereby ensuring the normal reception of the sensing signal.

In some embodiments, step S302 of sensing configuration information is sent by means of broadcasting may include the following steps:
step S3022: a sensing configuration of the second node is modulated to obtain a broadcast message, wherein the sensing configuration comprises at least one piece of the sensing configuration information; and
step S3024: the broadcast message is broadcast on the basis of pre-configured broadcast configuration information.

In the present embodiment, the sensing configuration is sent by means of broadcasting; there may be a plurality of terminals that receive the broadcast message, and each terminal that receives the broadcast may send a sensing request to the base station; by means of contention resolution, it can be ensured that each piece of sensing configuration information is ultimately allocated to only one terminal for use.

In some embodiments, the sensing configuration information may only include sensing request configuration information, wherein the sensing request configuration information is used for instructing the first node to send the sensing request on a corresponding resource configuration.

In some embodiments, the sensing configuration information may only comprise the sensing request configuration information and contention resolution configuration information, wherein the contention resolution configuration information is used for instructing the first node to receive the contention resolution acknowledgment message on a corresponding resource configuration.

In some embodiments, the sensing configuration information may include the sensing request configuration information, the contention resolution configuration information and the sensing signal configuration information simultaneously, wherein the sensing signal configuration information is used for instructing the first node to send the sensing signal on a corresponding resource configuration.

In the present embodiment, within the same piece of the sensing configuration information, there is a mapping relationship between the sensing request configuration information, the contention resolution configuration information and the sensing signal configuration information. In addition, there is also the same mapping relationship between the sensing request configuration information, the contention resolution configuration information, and the sensing signal configuration information which are used by each terminal.

In some embodiments, step S304 of receiving a sensing request that is sent by at least one first node after receiving the sensing configuration information comprises: receiving, on a resource configuration corresponding to the sensing request configuration information, the sensing request sent by the at least one first node after receiving the sensing configuration information, wherein the sensing request is used for requesting the second node to allow the first node to send the sensing signal.

Further, if the broadcast message of the second node includes a plurality of pieces of sensing configuration information, the second node needs to receive a sensing request for each piece of sensing configuration information.

In some embodiments, in a case where the sensing configuration information only comprises the sensing request configuration information, the sensing request may carry the contention resolution configuration information expected by the first node.

In some embodiments, in a case where the sensing configuration information only comprises the sensing request configuration information, the sensing request may carry the contention resolution configuration information and the sensing signal configuration information which are expected by the first node.

In some embodiments, in a case where the sensing configuration information only comprises the sensing request configuration information and the contention resolution configuration information, the sensing request may carry the sensing signal configuration information expected by the first node.

In some embodiments, step S306 of performing contention resolution according to the sensing request of the at least one first node may include the following steps:
step S3062: in a case where the sensing requests of the plurality of first nodes select the same sensing configuration information, contention resolution is used to allow only one first node to send the sensing signal using the sensing configuration information;
step S3064: in a case where the sensing requests of the plurality of first nodes select different pieces of sensing configuration information, the plurality of first nodes are allowed to respectively send the sensing signal using the corresponding sensing configuration information.

In an exemplary embodiment, the specific solution of the contention resolution in step S306 includes, but is not limited to, the following content:
solution 1: making decisions according to an RSRP, an SINR which are obtained by a base station by demodulating a sensing request sent by a terminal, etc., generally giving higher priority to larger values;
solution 2: making decisions according to the size of continuous available time-domain resources, the supported sensing bandwidth which are reported by the terminal, etc., which generally depends on the type of sensing service expected by the base station;
solution 3: making decisions according to the type of a sensing signal which can be supported by a terminal, etc., which generally depends on the type of a sensing service currently expected by a base station side;
solution 4: making decisions according to the GPS position information reported by the terminal, which generally depends on the sensing area that needs to be covered by the base station.

In some embodiments, step S306 of respectively sending the contention resolution acknowledgment message to the at least one first node according to a contention resolution result may comprise the following steps:
step S3068: the contention resolution acknowledgment message is respectively sent to a corresponding first node on a resource configuration corresponding to the contention resolution configuration information, wherein the contention resolution acknowledgment message comprises one of the following: indication information allowing the first node to send the sensing signal, and indication information not allowing the first node to send the sensing signal.

In some embodiments, step S306 of performing contention resolution according to the sensing request of the at least one first node may also include: step S3066A: in a case where the sensing configuration information only comprises the sensing request configuration information, the sensing signal configuration information is allocated to the first node by means of contention solution.

In some embodiments, step S306 of performing contention resolution according to the sensing request of the at least one first node may also include step S3066B: in a case where the sensing configuration information only comprises the sensing request configuration information and contention resolution configuration information, the sensing signal configuration information is allocated to the first node by means of contention solution.

In other embodiments, if the broadcast sensing configuration information already includes the sensing signal configuration, or if the sensing request sent by the first node carries the sensing signal configuration, the contention resolution only needs to confirm whether the first node is allowed to send the sensing signal, without performing resource allocation.

In some embodiments, step S308 may comprise: receiving, on a resource configuration corresponding to the sensing signal configuration information, the sensing signal sent by the corresponding first node, wherein the sensing signal configuration information used by each first node is different.

In some embodiments, the broadcast configuration information comprises at least one of:
a time-domain configuration of the broadcast message, comprising: a repetition period, a slot index within a frame or subframe, a starting symbol, and the number of symbols;
a frequency-domain configuration of the broadcast message, comprising: a starting resource block index and the number of resource blocks;
a code-domain configuration of the broadcast message, comprising: a reference signal code-domain index and a data signal code-domain index;
a spatial-domain configuration of the broadcast message, comprising: a beam index and a partition region index;
a sensing service type information configuration, comprising: a large amount of time-domain occupation, a large amount of frequency-domain occupation and/or a large amount of space domain occupation;
a sensing signal type information configuration, comprising: orthogonal frequency division multiplexing (OFDM), orthogonal time-frequency space (OTFS) and/or frequency modulation continuous wave (FMCW);
an environment condition reporting configuration, comprising: reporting a signal to interference plus noise ratio (SINR), reporting reference signal received power (RSRP) and/or reporting GPS.

In some embodiments, the sensing configuration comprises: a time-domain configuration and a frequency-domain configuration, wherein the time-domain configuration comprises a time-domain offset, a starting symbol, and the number of symbols; the frequency-domain configuration comprises a start resource block index and the number of resource blocks.

In some embodiments, the sensing configuration further comprises a code-domain configuration, wherein the code-domain configuration comprises a code-domain index.

In the embodiments of the present disclosure, the time-domain configuration and the frequency-domain configuration are necessary configurations, while the code-domain configuration is an important configuration. The number of code-domain configurations determines the maximum number of sensing resources that can be accommodated for terminals in the non-connected state to send sensing signals.

In some embodiments, the sensing request configuration information may specifically include:
a time-domain configuration of the sensing request, comprising: a first time-domain offset Tr relative to a broadcast message, a starting symbol of the sensing request, and the number of symbols of the sensing request;
a frequency-domain configuration of the sensing request, comprising: a starting resource block index of the sensing request, and the number of resource blocks of the sensing request;
a code-domain configuration of the sensing request, comprising a code-domain index random selection list or a code-domain index logic selection list.

In some embodiments, after step S2026 of selecting, on the basis of a sensing capability of the first node, one piece of the sensing configuration information from the sensing configuration, the method further comprises: randomly selecting one code-domain index from the code-domain index random selection list as the code-domain index of the first node; or, searching, on the basis of the signal quality of the broadcast message, for a corresponding code-domain index from the code-domain index logic selection list as the code-domain index of the first node.

In some embodiments, the contention resolution configuration information may specifically include: a time-domain configuration of the contention resolution acknowledgment message, comprising: a second time-domain offset TAN relative to the sensing request, a starting symbol of the contention resolution acknowledgment message, and the number of symbols of the contention resolution acknowledgment message;
a frequency-domain configuration of the contention resolution acknowledgment message, comprising: a starting resource block index of the contention resolution acknowledgment message, and the number of resource blocks of the contention resolution acknowledgment message;
a code-domain configuration of the contention resolution acknowledgment message, comprising: a code-domain index of a reference signal of the contention resolution acknowledgment message, and a code-domain index of a data signal of the contention resolution acknowledgment message. In some embodiments, the sensing signal configuration information may specifically include:
   a time-domain configuration of the sensing signal, comprising: a third time-domain offset TS relative to the contention resolution acknowledgment message, a starting symbol of the sensing signal, the number of symbols of the sensing signal, a starting slot index of the sensing signal, the number of slots of the sensing signal, and the number of slot repetitions of the sensing signal;
   a frequency-domain configuration of the sensing signal, comprising: a starting resource block index of the sensing signal, the number of resource blocks of the sensing signal, and an effective sensing bandwidth of the sensing signal; and
   a code-domain configuration of the sensing signal, comprising: a code-domain index of the sensing signal.

In some embodiments, the time-domain configuration of the sensing signal further comprises at least one of the following: a symbol duty cycle of the sensing signal, the number of symbol repetitions of the sensing signal, a slot duty cycle of the sensing signal, a length of the sensing signal, and a time-domain sampling duty cycle of the sensing signal.

In some embodiments, the sensing configuration further comprises classification information and/or condition information, wherein the classification information comprises at least one of a sensing signal type, a service type and an architecture type; and the condition information comprises at least one of a terminal capability, a terminal location and a signal strength.

Further, on the basis of the described classification information or condition information and its own capability, the first node may determine whether a corresponding sensing service can be supported. The first node may send a sensing request only if its capabilities support the corresponding sensing service; if the first node does not support it, the broadcast message may be ignored and no sensing request is sent.

In some embodiments, the sensing configuration further comprises a spatial-domain configuration, wherein the spatial-domain configuration is used in cooperation with the time-domain configuration, the frequency-domain configuration and the code-domain configuration, and the spatial-domain configuration comprises a broadcast beam index and a partition region index.

In the present embodiment, the spatial-domain configuration is an optional configuration. For example, the spatial-domain configuration may include spatial-domain filters pointing to different directions at different time (frames, slots, symbols, time-domain sampling points); The spatial-domain configuration may also include, in a carrier aggregation scheme, spatial-domain filters of different carriers covering different regions.

In some embodiments, the sensing request carries capability information of the first node and/or GPS position information of the first node. Further, when performing contention resolution, the second node may refer to the information reported in the sensing request, for example, by selecting the first node with the closest distance to perform reporting of the sensing service.

In some embodiments, the RRC states may include: a connected state, an idle state, and an inactive state. The RRC connected state indicates that the device has established a connection with the base station and can perform data transmission and communication. The present disclosure does not impose any restriction on the RRC state of the terminal. In addition to connected-state terminals, sensing resource configuration can also be performed for non-connected-state terminals (such as idle state or inactive state).

By means of the embodiments of the present disclosure, sensing resource configuration can be performed for non-connected-state terminals by means of broadcasting; non-connected-state terminals can also send sensing signals without accessing the base station to obtain detailed RRC signaling; and this solves With the embodiments of the present disclosure, sensing resource configuration can be performed for non-connected-state terminals by means of broadcasting. Non-connected-state terminals can also transmit sensing signals without accessing the base station to obtain detailed RRC signaling. This solves the problem in the related art that sensing resource configuration can only be performed for terminals in the RRC connected state, thereby expanding the applicable scope of sensing services. Furthermore, contention resolution can prevent a plurality of nodes from using the same sensing resource, thereby ensuring the normal reception of the sensing signal.

In the embodiments of the present disclosure, the terminal can send sensing signals in a non-connected state. Compared with the solution in which the corresponding configuration can only be issued to the terminal after the terminal enters a connected state, the solution in the embodiments of the present disclosure is simpler in the configuration update process. It does not need to consider whether the configuration validity period has expired, nor does it need to consider whether the terminal's own connection state is sufficient to support sensing service information. The terminal can obtain the corresponding configuration update information in any state, making the sensing resource configuration more convenient and efficient.

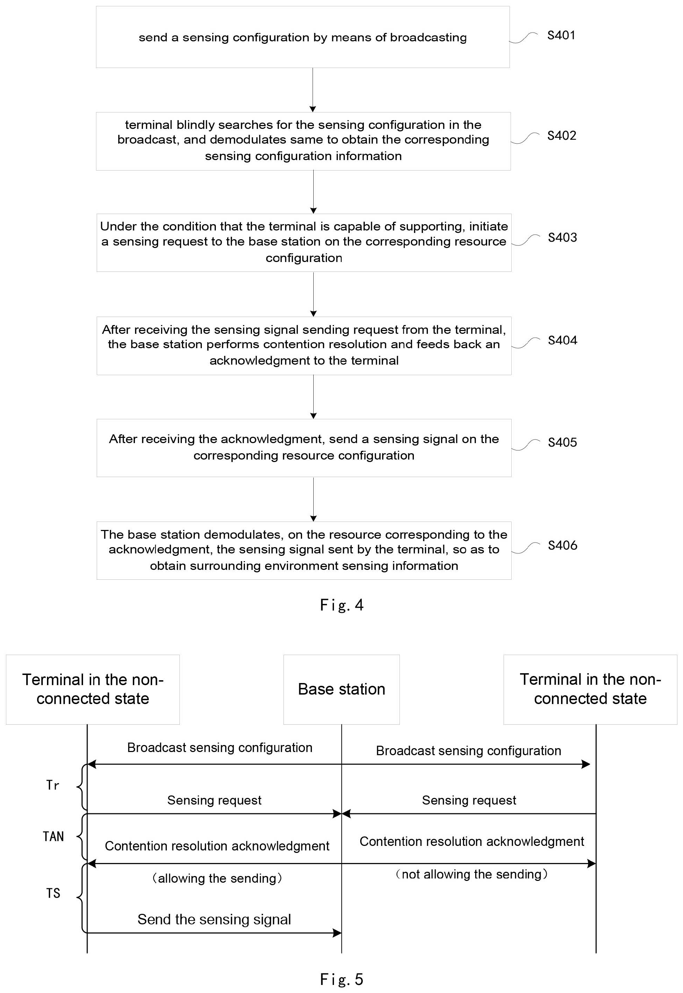

Fig. 4 is an overall flowchart of a sensing service management method according to an embodiment of the present disclosure. As shown in Fig. 4, the flow includes the following steps:
step S401: a sensing configuration is sent by means of broadcasting;
step S402: a terminal blindly searches for the sensing configuration in the broadcast, and demodulates same to obtain the corresponding sensing configuration information;
step S403: under the condition that the terminal is capable of supporting, initiate a sensing request to the base station on the corresponding resource configuration;
step S404: after receiving the sensing signal sending request from the terminal, the base station performs contention resolution and feeds back an acknowledgment to the terminal;
step S405: after receiving the acknowledgment, send a sensing signal on the corresponding resource configuration;
step S406: the base station demodulates, on the resource corresponding to the acknowledgment, the sensing signal sent by the terminal, so as to obtain surrounding environment sensing information.

In the present embodiment, a plurality of terminals in the non-connected state may receive the message broadcast by the base station. In a case where the terminal confirms that its own capability supports the sensing service, the non-connected-state terminal sends a sensing request (i.e., a sensing signal transmission request) on the corresponding resource configuration. When a plurality of terminals request the same sensing configuration simultaneously, the base station can only allow one terminal to send the sensing signal. The base station may determine, by means of contention resolution, which terminal is allowed to send the sensing signal.

In the present embodiment, the sensing configuration in step S401 includes, but is not limited to, resource configuration information in multiple dimensions such as time-domain, frequency-domain, code-domain, and spatial-domain (i.e., sensing configuration information), wherein the time-domain and frequency-domain configurations are necessary configurations in sensing configuration information; the code-domain configuration is an important configuration; the number of code-domain configurations determines the maximum number of sensing resources that can be accommodated for terminals in the non-connected state to send sensing signals; the spatial-domain configuration is an optional configuration. The spatial-domain configuration is generally used in coordination with certain dimensions among the time-domain, frequency-domain, and code-domain. In an example embodiment, the spatial-domain configuration may be as follows:
a. spatial-domain filters pointing to different directions at different time (frames, slots, symbols, time-domain sampling points);
b. in a carrier aggregation scheme, spatial-domain filters of different carriers covering different regions.

In some embodiments, the sensing configuration can further include classification information such as a sensing signal type, a service type, and an architecture type; the sensing configuration may further comprise condition information, such as a terminal capability, a terminal location and a signal strength.

In the present embodiment, the sensing configuration should at least indicate resource configuration information of the sensing request (i.e. the described sensing request configuration information), and the sensing request configuration information should include a first time-domain offset Tr, a frequency-domain resource block configuration, etc.

In some embodiments, the sensing configuration may also directly include resource configuration information (i.e., described contention resolution configuration information) for contention resolution acknowledgment.

In some embodiments, the sensing configuration may also directly include resource configuration information (i.e. the described sensing signal configuration information) for sending sensing signals. In the present embodiment, in step S402, the terminal may at least demodulate to obtain the sensing request configuration information, including time-domain, frequency-domain, code-domain, spatial-domain, etc. In some embodiments, the terminal may also demodulate to obtain other configuration information, including classification information, condition information, etc.

In the present embodiment, in step S403, the terminal determines, according to various configuration information in the sensing configuration, whether it meets the sensing capability requirements, including: whether it can send a sensing signal at the corresponding resource location, whether it supports the corresponding sensing service type, whether it supports sending the corresponding signal type, and whether the RSRP and SINR obtained from broadcast demodulation meet the requirements, etc.

In some embodiments, the terminal needs to select a code-domain index after determining the resource configuration. There may be multiple methods for the terminal to select the code-domain index: random selection; or selection based on a logical relationship. Exemplarily, the terminal may randomly select a code-domain index from a code-domain index random selection list; or, the terminal may search a preset code-domain index logic selection list for a corresponding code-domain index according to values, such as the power and signal-to-noise ratio, of the demodulated signal obtained during the blind search.

In some embodiments, when sending the request, if the terminal has its own GPS location information, the terminal needs to carry and report that information in the sensing request.

In the present embodiment, when different terminals in the non-connected state select the same sensing resource, the base station may use a contention resolution method to determine which terminals can use the corresponding sensing resource.

In an exemplary embodiment, the specific solution for the contention resolution includes, but is not limited to, the following:
solution 1: making decisions according to an RSRP, an SINR which are obtained by a base station by demodulating a sensing request sent by a terminal, etc., generally giving higher priority to larger values;
solution 2: making decisions according to the size of continuous available time-domain resources, the supported sensing bandwidth which are reported by the terminal, etc., which generally depends on the type of sensing service expected by the base station;
solution 3: making decisions according to the type of a sensing signal which can be supported by a terminal, etc., which generally depends on the type of a sensing service currently expected by a base station side;
solution 4: making decisions according to the GPS position information reported by the terminal, which generally depends on the sensing area that needs to be covered by the base station.

In the present embodiment, the contention resolution feedback (i.e., the contention resolution acknowledgment message) needs to at least include indication information allowing the terminal to send the sensing signal or indication information not allowing the terminal to send the sensing signal.

In some embodiments, the contention resolution acknowledgment message may carry resource configuration information (i.e. sensing signal configuration information) instructing the terminal to send a sensing signal;
in the present embodiment, after receiving the acknowledgment information, the terminal sends the sensing signal on the resource configuration corresponding to the sensing signal configuration information.

In some embodiments, the sensing signal configuration information at least comprises information such as a time-domain, a frequency-domain, a code-domain, and a space domain. There are a plurality of optional types of sensing signals sent by the terminal, and the sensing signals can be selectively determined in the foregoing sensing configuration.

In the present embodiment, after step S406, if the terminal experiences a state change during the transmission of the sensing signal such that it can no longer support the sensing service, it may terminate the transmission of the sensing signal in a timely manner.

In an exemplary implementation, the change of the terminal state includes, but is not limited to: the terminal itself has a higher priority service to perform; and the terminal's location moves beyond a certain distance.

In the embodiments of the present disclosure, the more important configuration information may include: broadcast configuration information, sensing request configuration information, contention resolution configuration information, and sensing signal configuration information.

In an exemplary embodiment, the broadcast configuration information may include the following content:
a time-domain configuration, comprising: a repetition period in the time-domain, a slot index within a frame or subframe, a starting symbol, and the number of symbols;
a frequency-domain configuration, comprising: a starting resource block index and the number of resource blocks;
a code-domain configuration, comprising: a reference signal and a data signal code-domain index; a spatial-domain configuration, comprising: a beam index and a partition region index;
a sensing service type information configuration, comprising: high time-domain occupation, high frequency-domain occupation, and high spatial-domain occupation;
a sensing signal type information configuration, comprising: OFDM, OTFS and FMCW;
a terminal environment condition reporting configuration, comprising: reporting an SINR, reporting an RSRP and reporting a GPS;
importance and reason for the importance.

In an exemplary embodiment, the sensing request configuration information may include the following content:
a time-domain configuration, comprising a time-domain offset Tr relative to the broadcast, a starting symbol, and the number of symbols;
a frequency-domain configuration, comprising: a starting resource block index and the number of resource blocks;
a code-domain configuration, comprising a code-domain index random selection list or a code-domain index logic selection list;
a spatial-domain configuration, comprising: a bound broadcast beam index and a bound partition region index.

In an exemplary embodiment, the contention resolution configuration information may include the following content:
a time-domain configuration, comprising a time-domain offset Tr relative to the broadcast, a starting symbol, and the number of symbols;
a frequency-domain configuration, comprising: a starting resource block index and the number of resource blocks;
a code-domain configuration, comprising: a reference signal code-domain index and a data signal code-domain index;
a spatial-domain configuration, comprising: a bound broadcast beam index and a bound partition region index.

In an exemplary embodiment, the sensing signal configuration information may include the following content:
a time-domain configuration, comprising: a time-domain offset T S relative to the sensing request or contention resolution, a start symbol position, the number of symbols, a sensing signal symbol duty cycle, the number of symbol repetitions, a starting slot index, the number of slots, a sensing signal slot duty cycle, the number of slot repetitions, a sensing signal length, and a sensing signal time-domain sampling duty cycle;
a frequency-domain configuration, comprising: a starting resource block index, the number of resource blocks, and an effective sensing bandwidth;
a code-domain configuration, comprising: a code-domain index of the sensing signal;
a spatial-domain configuration, comprising: a bound broadcast beam index and a bound partition region index.

Fig. 5 is a sensing service flowchart of a terminal in the non-connected state sensing a sensing signal according to an embodiment of the present disclosure. As shown in Fig. 5, a plurality of terminals in the non-connected state may receive the broadcast sensing configuration from the base station. The plurality of terminals that meet the requirements will respectively send sensing requests to the base station. The base station performs contention resolution on the basis of the sensing request from each terminal and respectively feeds back corresponding contention resolution acknowledgment messages.

In the present embodiment, the contention resolution acknowledgment message includes two types: one indicating that sending is allowed, and the other indicating that sending is not allowed. Only a terminal allowed to send a sensing signal can execute the subsequent process of sending the sensing signal.

In some embodiments, a terminal receiving a competition resolution acknowledgment message indicating that sending is not allowed will continue blind search to wait for the next broadcast of sensing configuration from the base station.

In the present embodiment, the time-domain offset of the sensing request relative to the broadcast message is the first time-domain offset Tr, the time-domain offset of the contention resolution acknowledgment message relative to the sensing request is the second time-domain offset TAN, and the time-domain offset of the sensing signal relative to the contention resolution acknowledgment message is the third time-domain offset TS.

By means of the embodiments of the present disclosure, the sensing resource configuration for terminals in the non-connected stateterminals in the non-connected state can be ensured by means of broadcasting, while resource conflicts among a plurality of terminals can be avoided by means of contention resolution, thereby solving the problem in the related art that sensing resource configuration is only possible for terminals in an RRC connected state, and expands the applicable scope of sensing services.

In an exemplary embodiment, the sensing configuration broadcast by the base station contains complete sensing configuration information (sensing request configuration information, contention resolution configuration information, and sensing signal configuration information). The sensing request may only contain information requesting to send the sensing signal, and the contention resolution acknowledgment message may only contain indication information indicating whether the sending of the sensing signal is allowed or not.

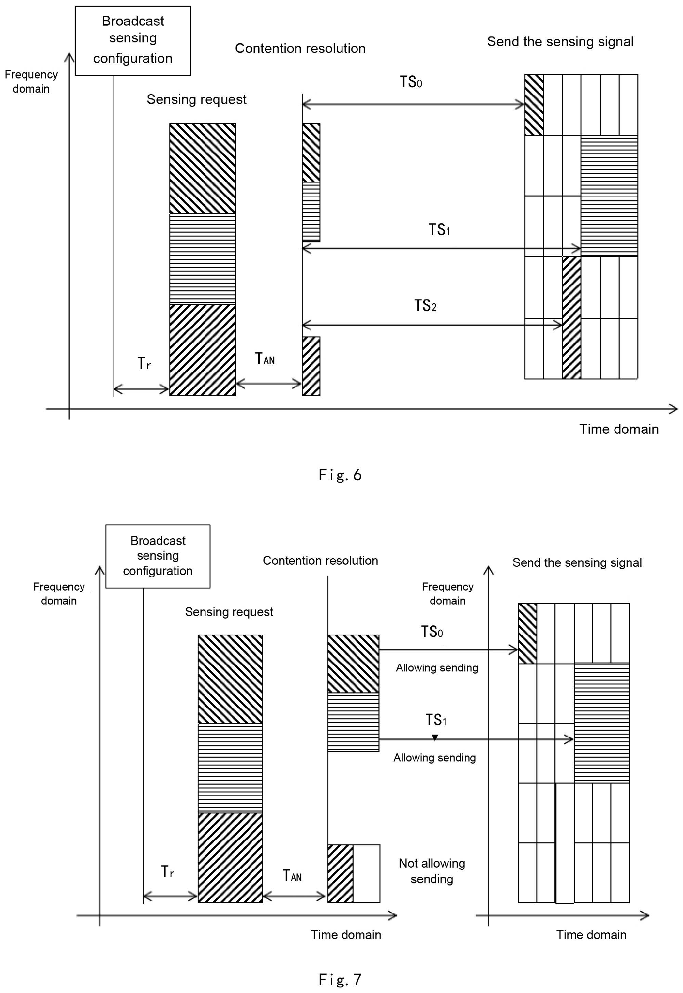

Fig. 6 is a schematic diagram (1) of sensing service resource configuration according to an embodiment of the present disclosure. As shown in Fig. 6, the sensing configuration broadcast by the base station contains at least three complete sets of sensing configuration information; and the resources corresponding to three pieces of sensing configuration information are respectively represented by three types of legends: backslash, horizontal line, and forward slash.

In the present embodiment, the sensing request configuration information, contention resolution configuration information, and sensing signal configuration information in each piece of sensing configuration information have a mapping relationship and are represented using the same legend. In the present embodiment, at least three terminals have received the sensing configuration; each terminal selects one piece of sensing request configuration information and sends a sensing request on the corresponding radio resource; the base station feeds back contention resolution acknowledgment messages respectively, allowing the three terminals to send sensing signals according to their respective sensing signal configuration information.

In the present embodiment, taking one of the terminals as an example, the detailed steps for configuring sensing service resources are as follows:
step S601: a base station broadcasts and sends a complete sensing configuration.
Step S602: upon obtaining the sensing configuration information by demodulation and determining that its own sensing capability meets the requirements, the terminal retains the sensing request configuration information, the contention resolution configuration information, and the sensing signal configuration information contained therein.
Step S603: according to the indication in the sensing request configuration information, after a time offset Tr (the first time-domain offset), on the corresponding frequency-domain resource block and the corresponding spatial-domain resource index, the terminal selects the corresponding code-domain index randomly or as designated, and sends a sensing request. The sensing request may carry capability information and GPS information of the terminal, etc.
Step S604 (which is performed synchronously with step S603): on the time-domain resources, frequency-domain resources, and spatial-domain resources corresponding to the sensing request configuration information, the base station receives the sensing request sent by the terminal. The base station scans and demodulates the code-domain signals to obtain sensing requests from a plurality of terminals, selects a contention resolution scenario on the basis of information reported by the terminals in the sensing requests, and determines which terminals will be selected to send the sensing signals.
Step S605: the base station sends, on the resource configuration corresponding to the contention resolution configuration information, the contention resolution acknowledgment message (allowing or not allowing the sending of sensing signals) to the terminal. The contention resolution is offset by the TAN relative to the time-domain ending position of the sensing request (the contention resolution can also be offset backward by the TAN relative to the time-domain starting point of the sensing request).
Step S606 (which is performed synchronously with step S605): after an offset of TAN from the completion of sending the sensing request (which lay also be after an offset of TAN from the starting of sending of the sensing request), the terminal receives the contention resolution acknowledgment information fed back by the base station.
Step S607: the terminal, that has received contention resolution acknowledgment information not allowing sending of sensing signals, can enter the next cycle and reselect from broadcast-configured resources to initiate a sensing request.
Step S608: the terminal, that has received contention resolution acknowledgment information allowing sending of sensing signals, sends the sensing signal on the resource configuration indicated in the sensing signal configuration information.

In the present embodiment, the configuration of the second time-domain offset TAN needs to meet the base station's own requirements, i.e., the TAN needs to be greater than the time required by the base station to complete contention resolution.

In the present embodiment, in order to improve the sensing accuracy, the sensing bandwidth is generally set to be relatively large; therefore, the third time-domain offsets TS used by different terminals are generally different.

In an exemplary embodiment, the sensing configuration broadcast by the base station includes only part of the sensing configuration information (the sensing request configuration information and the contention resolution configuration information). In this case, the sensing signal configuration information can be issued to the terminal by the base station by means of the contention resolution acknowledgment message after the base station completes contention resolution.

Fig. 7 is a schematic diagram (2) of sensing service resource configuration according to an embodiment of the present disclosure. As shown in Fig. 7, the sensing configuration broadcast by the base station contains at least three complete sets of sensing configuration information (excluding the sensing signal configuration information); and the resources corresponding to three pieces of sensing configuration information are respectively represented by three types of legends: backslash, horizontal line, and forward slash.

In the present embodiment, the sensing request configuration information, contention resolution configuration information, and sensing signal configuration information in each piece of sensing configuration information have a mapping relationship and are represented using the same legend. In the present embodiment, at least three terminals have received the sensing configuration; each terminal selects one piece of sensing request configuration information and sends a sensing request on the corresponding radio resource; the base station feeds back contention resolution acknowledgment messages respectively, allowing two of the terminals to send sensing signals according to their respective sensing signal configuration information, and indicating that another terminal cannot send sensing signals.

In the present embodiment, the detailed steps for configuring sensing service resources are as follows:
Step S701: the base station broadcasts sensing configuration which includes sensing request configuration information and contention resolution configuration information, and may also include configuration information other than the sensing signal configuration information.
Step S702: upon obtaining the sensing configuration information by demodulation and determining that its own sensing capability meets the requirements, the terminal retains the sensing request configuration information and the contention resolution configuration information.
Step S703: according to the indication in the sensing request configuration information, after a time offset Tr, on the corresponding frequency-domain resource block and the corresponding spatial-domain resource index, the terminal selects the corresponding code-domain index randomly or as designated, and sends a sensing request. The sensing request may carry capability information and GPS information of the terminal, etc.
Step S704 (which is performed synchronously with step S703): on the time-domain resources, frequency-domain resources, and spatial-domain resources corresponding to the sensing request configuration information, the base station receives the sensing request sent by the terminal. The base station scans and demodulates the code-domain signals to obtain sensing requests from a plurality of terminals, selects a contention resolution scenario on the basis of information reported by the terminals in the sensing requests, and determines, by means of contention resolution, which terminals will be selected to send the sensing signals.
Step S705: on the configuration resources corresponding to the contention resolution configuration information, the base station sends a contention resolution acknowledgment message (indicating allowing sending or not allowing sending) to the terminal, and the information sent to the terminal allowed to send also carries the sensing signal configuration information. The resource configuration for contention resolution is offset by TAN after the end of the time domain of the sensing request.
Step S706 (which is performed synchronously with step S705): after an offset of TAN from the sending of the sensing request, the terminal receives the contention resolution acknowledgment message fed back by the base station.
Step S707: the terminal that receives information not allowing sending of sensing signals can enter the next cycle and reselect configured resources from the broadcast sensing configuration to initiate a sensing request.
Step S708: the terminal that receives information allowing sending of sensing signals sends the sensing signal on the resource configuration corresponding to the sensing signal configuration information.

In the present embodiment, in order to improve the sensing accuracy, the sensing bandwidth is generally relatively large; therefore, the time-domain offsets TS used by different terminals are generally different.

In the present embodiment, the time-domain length occupied by the contention resolution acknowledgment message is related to whether the contention resolution acknowledgment message contains sensing signal configuration information. For terminals that are not allowed to send sensing signals, the contention resolution acknowledgment message does not include sensing signal configuration information and thus occupies a shorter time-domain length.

In an exemplary embodiment, the sensing configuration broadcast by the base station includes only part of the sensing configuration information (the sensing request configuration information). The contention resolution configuration information and sensing signal configuration information can be the configurations desired and selected by the terminal, and are notified to the base station by means of the sensing request (which includes the desired contention resolution configuration information and the desired sensing signal configuration information). The base station performs contention resolution by comprehensively considering various pieces of configuration information and information about various terminals.

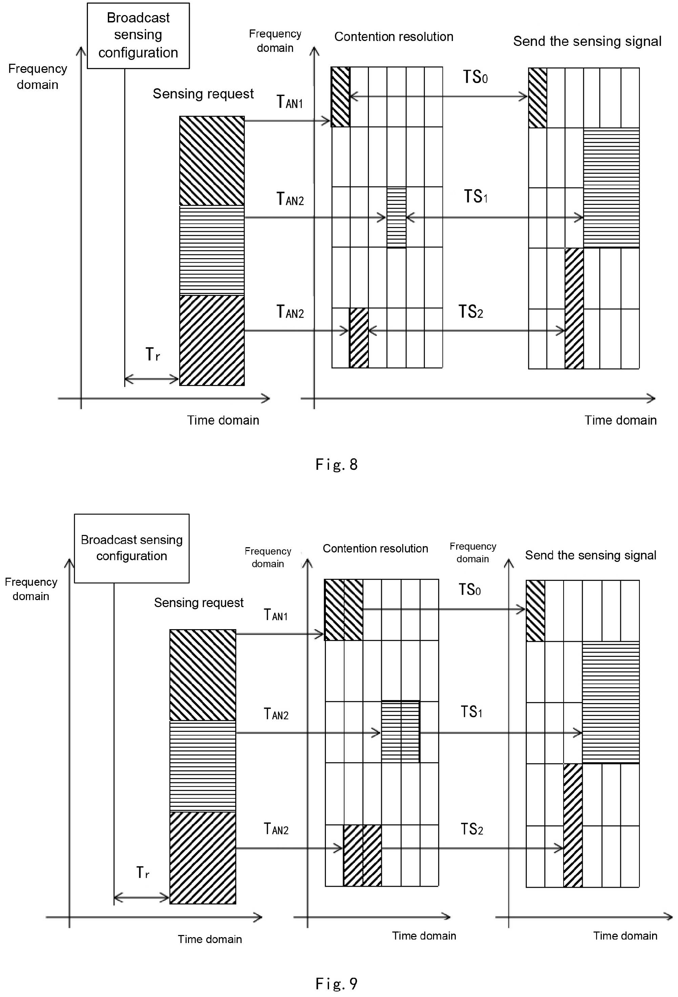

Fig. 8 is a schematic diagram (3) of sensing service resource configuration according to an embodiment of the present disclosure. As shown in Fig. 8, the sensing configuration broadcast by the base station contains at least three complete sets of sensing configuration information (excluding the contention resolution configuration information and the sensing signal configuration information); and the resources corresponding to three pieces of sensing configuration information are respectively represented by three types of legends: backslash, horizontal line, and forward slash.

In the present embodiment, the sensing request configuration information, contention resolution configuration information, and sensing signal configuration information in each piece of sensing configuration information have a mapping relationship and are represented using the same legend. In the present embodiment, the detailed steps for configuring sensing service resources are as follows:
Step S801: the base station broadcasts and sends sensing configuration, which is mainly sensing request configuration information.
Step S802: upon obtaining the sensing configuration information by demodulation and determining that the sensing capability thereof satisfies the requirements, according to the indication in the sensing request configuration information, after a time offset Tr, on the corresponding frequency-domain resource block and the corresponding spatial-domain resource index, the terminal selects the corresponding code-domain index randomly or as designated, and sends a sensing request. The sensing request sent by the terminal carries the contention resolution configuration information and the sensing signal configuration information which are desired by the terminal. In addition, the sensing request sent by the terminal may carry the information of the terminal, GPS information, etc.
Step S803 (which is performed synchronously with step S802): on the time-domain resources, frequency-domain resources, and spatial-domain resources corresponding to the sensing request configuration information, the base station receives the sensing request sent by the terminal. The base station scans and demodulates the code-domain signals to obtain sensing requests from a plurality of terminals, evaluates and selects a contention resolution scenario on the basis of information reported by the terminals in the sensing requests, and determines which terminals will be selected to send the sensing signals.
Step S804: on the contention resolution configuration information, the base station sends a contention resolution acknowledgment message (indicating whether the sending is allowed or not allowed) to the terminal. The resource configuration for contention resolution is offset by TAN after the end of time domain of the resource configuration time-domain for the sensing request.
Step S805 (which is performed synchronously with step S804): after an offset of TAN from the sending of the sensing request, the terminal receives the contention resolution acknowledgment information fed back by the base station.
Step S806: the terminal that receives information not allowing sending of sensing signals can enter the next cycle and reselect resource configuration from the broadcast sensing configuration to initiate a sensing request.
Step S807: the terminal that receives information allowing sending of sensing signals sends the sensing signal on the resource configuration indicated by the sensing signal configuration information.

In the present embodiment, in order to improve the sensing accuracy, the sensing bandwidth is generally relatively large; therefore, the time-domain offsets TS used by different terminals are generally different.

In the present embodiment, the time consumed by different terminals to determine their desired contention resolution configuration information and sensing signal configuration information may vary. Correspondingly, the time-domain information (i.e., the second time domain offset TAN) of the contention resolution configuration is generally different for different terminals.

In an exemplary embodiment, the sensing configuration broadcast by the base station includes only part of the sensing configuration information (the sensing request configuration information). The contention resolution configuration information may be the configuration information desired by the terminal, and is notified to the base station by means of a sensing request (including the desired contention resolution configuration information). In this case, the sensing signal configuration information can be issued to the terminal by the base station by means of the contention resolution acknowledgment message after the base station completes contention resolution.

Fig. 9 is a schematic diagram (4) of sensing service resource configuration according to an embodiment of the present disclosure. As shown in Fig. 9, the sensing configuration broadcast by the base station contains at least three complete sets of sensing configuration information (excluding the contention resolution configuration information and the sensing signal configuration information); and the resources corresponding to three pieces of sensing configuration information are respectively represented by three types of legends: backslash, horizontal line, and forward slash.

In the present embodiment, the sensing request configuration information, contention resolution configuration information, and sensing signal configuration information in each piece of sensing configuration information have a mapping relationship and are represented using the same legend. In the present embodiment, the detailed steps for configuring sensing service resources are as follows:
Step S901: the base station broadcasts and sends sensing configuration, which is mainly sensing request configuration information.
Step S902: upon obtaining the sensing configuration information by demodulation and determining that its sensing capability satisfies the requirements, according to the indication in the sensing request configuration information, after a time offset Tr, on the corresponding frequency-domain resource block and the corresponding spatial-domain resource index, the terminal selects the corresponding code-domain index randomly or as designated, and sends a sensing request. The sensing request sent by the terminal carries the contention resolution configuration information (which is mainly the time-domain offset configuration) expected by the terminal. In addition, the sensing request sent by the terminal may carry the information of the terminal, GPS information, etc.
Step S903 (which is performed synchronously with step S902): on the time-domain resources, frequency-domain resources, and spatial-domain resources corresponding to the sensing request configuration information, the base station receives the sensing request sent by the terminal. The base station scans and demodulates the code-domain signals to obtain sensing requests from a plurality of terminals, evaluates and selects a contention resolution scenario on the basis of information reported by the terminals in the sensing requests, and determines which terminals will be selected to send the sensing signals.
Step S904: on the resource configuration for contention resolution, the base station sends a contention resolution acknowledgment message (indicating allowing sending or not allowing sending) to the terminal, and the information sent to the terminal allowed to send also carries the sensing signal configuration information. The resource configuration for contention resolution is offset by TAN after the end of time domain of the resource configuration time-domain for the sensing request.
Step S905 (which is performed synchronously with step S904): after an offset of TAN from the sending of the sensing request, the terminal receives the contention resolution acknowledgment message fed back by the base station.
Step S906: the terminal that receives an indication not allowing sending of sensing signals can enter the next cycle and reselect resource configuration in the broadcast sensing configuration to initiate a sensing request again.
Step S907: the terminal that receives an indication allowing sending of sensing signals sends the sensing signal on the resource configuration corresponding to the sensing signal configuration information.

In the present embodiment, in order to improve the sensing accuracy, the sensing bandwidth is generally relatively large; therefore, the time-domain offsets TS used by different terminals are generally different.

In the present embodiment, the time-domain length occupied by the contention resolution acknowledgment message is related to whether the contention resolution acknowledgment message contains sensing signal configuration information. For terminals that are not allowed to send sensing signals, the contention resolution acknowledgment message does not include sensing signal configuration information and thus occupies a shorter time-domain length.

In the present embodiment, the time consumed by different terminals to determine their desired contention resolution configuration information may vary. Correspondingly, the time-domain information (i.e., the second time domain offset TAN) of the contention resolution configuration is generally different for different terminals.

In an exemplary embodiment, the sensing configuration broadcast by the base station includes only part of the sensing configuration information (the sensing request configuration information and the contention resolution configuration information). The sensing signal configuration information may be the configuration information desired by the terminal, and is notified to the base station by means of a sensing request (including the desired sensing signal configuration information).

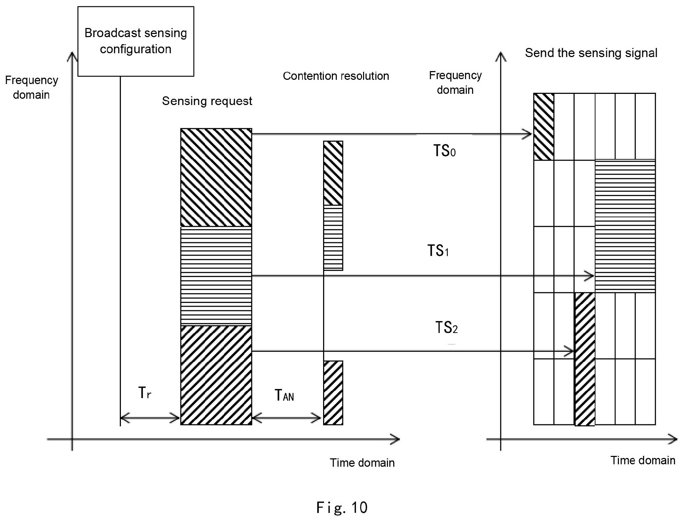

Fig. 10 is a schematic diagram (5) of sensing service resource configuration according to an embodiment of the present disclosure. As shown in Fig. 10, the sensing configuration broadcast by the base station contains at least three complete sets of sensing configuration information (excluding the contention resolution configuration information and the sensing signal configuration information); and the resources corresponding to three pieces of sensing configuration information are respectively represented by three types of legends: backslash, horizontal line, and forward slash.

In the present embodiment, the sensing request configuration information, contention resolution configuration information, and sensing signal configuration information in each piece of sensing configuration information have a mapping relationship and are represented using the same legend. In the present embodiment, the detailed steps for configuring sensing service resources are as follows:
Step S1001: the base station broadcasts and sends the sensing configuration, which includes sensing request configuration information, contention resolution configuration information, and other configuration information.
Step S1002: upon obtaining the sensing configuration information by demodulation and determining that its own sensing capability meets the requirements, the terminal retains the sensing request configuration information and the contention resolution configuration information.
Step S1003: according to the indication in the sensing request configuration information, after a time offset Tr, on the corresponding frequency-domain resource block and the corresponding spatial-domain resource index, the terminal selects the corresponding code-domain index randomly or as designated, and sends a sensing request. The sensing request information sent by the terminal carries the sensing signal configuration information expected by the terminal. In addition, the sensing request sent by the terminal may carry the information of the terminal, GPS information, etc.
Step S1004 (which is performed synchronously with step S1003): on the time-domain resources, frequency-domain resources, and spatial-domain resources corresponding to the sensing request configuration information, the base station receives the sensing request sent by the terminal. The base station scans and demodulates the code-domain signals to obtain sensing requests from a plurality of terminals, evaluates and selects a contention resolution scenario on the basis of information reported by the terminals in the sensing requests, and determines which terminals will be selected to send the sensing signals.
Step S1005: on the contention resolution configuration information, the base station sends a contention resolution acknowledgment message (information allowing sending or information not allowing sending). The resource configuration for contention resolution is offset by TAN after the end of time domain of the resource configuration time-domain for the sensing request.
Step S1006: after an offset of TAN from the sending of the sensing request, the terminal receives the contention resolution acknowledgment message fed back by the base station.
Step S1007: the terminal that receives information not allowing sending of sensing signals can enter the next cycle and reselect resource configuration from the broadcast-configured resources to initiate a sensing request.
Step S1008: the terminal that receives information allowing sending of sensing signals sends the sensing signal on the resource configuration corresponding to the sensing signal configuration information.

In the present embodiment, in order to improve the sensing accuracy, the sensing bandwidth is generally relatively large; therefore, the time-domain offsets TS used by different terminals are generally different.

In the present embodiment, since the time-domain information (the third time-domain offset TS) of the sensing signal configuration is directly selected by the terminal when sending the sensing request, in this case, the third time-domain offset may be calculated relative to the sensing request. According to another aspect of the embodiments of the present disclosure, further provided is a terminal, configured to perform the steps in any one of the method embodiments of the first node side.

According to another aspect of the embodiments of the present disclosure, further provided is a base station, configured to perform the steps in any one of the method embodiments of the second node side.

In the embodiments of the present disclosure, the base station may perform the steps in any one of the method embodiments of the base station side.

The embodiments of the present disclosure further provide a computer readable storage medium storing a computer program, wherein the computer program is configured to execute, when being run by the processor, the operations in any one of the described method embodiments.

In an exemplary embodiment, the computer readable storage medium may include, but is not limited to, any medium that can store a computer program, such as a USB flash drive, a Read-Only Memory (ROM), a Random Access Memory (RAM), a removable hard disk, a magnetic disk, or an optical disc.

The embodiments of the present disclosure further provide an electronic apparatus, including a memory and a processor; the memory stores a computer program, and the processor is configured to run the computer program, so as to execute the operations in any one of the method embodiments.

In an exemplary embodiment, the electronic device can further comprise a transmission device and an input/output device, wherein the transmission device is connected to the processor, and the input/output device is connected to the processor.

For specific examples in the present embodiment, reference can be made to the examples described in the described embodiments and exemplary embodiments, and thus they will not be repeated again in the present embodiment.

Obviously, those skilled in the art should understand that the modules or steps in some embodiments of the present disclosure can be implemented by using a general computing device, and they can be integrated in a single computing device, and can also be distributed over a network consisting of a plurality of computing devices. They may be implemented by using executable program codes of the computing devices. Thus, they can be stored in a storage device and executed by the computing devices. Furthermore, in some cases, the shown or described steps may be executed in an order different from that described here, or they can be respectively implemented by individual Integrated Circuit modules, or they can be implemented by making a plurality of the modules or steps into a single Integrated Circuit module. Thus, the present disclosure is not limited to any specific hardware and software combinations.

The content above only relates to preferred embodiments of the present disclosure, and is not intended to limit the present disclosure. For a person skilled in the art, the present disclosure may have various modifications and changes. Any modifications, equivalent replacements, improvements, etc. made within the principle of the present disclosure shall all fall within the scope of protection of the present disclosure.

## Claims

1. A sensing service management method, applied to a first node, the method comprising:
acquiring sensing configuration information broadcast by a second node;
sending a sensing request to the second node according to the sensing configuration information;
acquiring a contention resolution acknowledgment message fed back by the second node, wherein the contention resolution acknowledgment message is a result of the second node performing contention resolution according to the sensing request sent by at least one first node; and
in a case where the contention resolution acknowledgment message comprises indication information allowing the first node to send a sensing signal, sending the sensing signal to the second node.

2. The method according to claim 1, wherein acquiring the sensing configuration information broadcast by the second node comprises:
based on pre-configured broadcast configuration information, searching for a broadcast message sent by the second node;
demodulating the broadcast message to obtain a sensing configuration which comprises at least one piece of sensing configuration information; and
based on a sensing capability of the first node, selecting one piece of the sensing configuration information from the sensing configuration.

3. The method according to claim 1, wherein the sensing configuration information comprises one of:
sensing request configuration information which is used for instructing the first node to send the sensing request on a corresponding resource configuration;
the sensing request configuration information and contention resolution configuration information, wherein the contention resolution configuration information is used for instructing the first node to receive the contention resolution acknowledgment message on a corresponding resource configuration;
the sensing request configuration information, the contention resolution configuration information and sensing signal configuration information, wherein the sensing signal configuration information is used for instructing the first node to send the sensing signal on a corresponding resource configuration;
wherein in the same piece of the sensing configuration information, there is a mapping relationship among the sensing request configuration information, the contention resolution configuration information and the sensing signal configuration information.

4. The method according to claim 3, wherein sending a sensing request to the second node according to the sensing configuration information comprises:
sending the sensing request on a resource configuration corresponding to the sensing request configuration information, wherein the sensing request is used for requesting the second node to allow the first node to send the sensing signal.

5. The method according to claim 4, wherein before sending a sensing request to the second node according to the sensing configuration information, the method further comprises:
in a case where the sensing configuration information only comprises the sensing request configuration information, determining, on the basis of the sensing capability of the first node and the mapping relationship, the contention resolution configuration information expected by the first node; or,
in a case where the sensing configuration information only comprises the sensing request configuration information, determining, on the basis of the sensing capability of the first node and the mapping relationship, the competition solution configuration information and the sensing signal configuration information which are expected by the first node; or,
in a case where the sensing configuration information only comprises the sensing request configuration information and the contention resolution configuration information, determining, on the basis of the sensing capability of the first node and the mapping relationship, the sensing signal configuration information expected by the first node.

6. The method according to claim 5, wherein acquiring a contention resolution acknowledgment message fed back by the second node comprises: acquiring, according to the contention resolution configuration information, the contention resolution acknowledgment message fed back by the second node.

7. The method according to claim 6, wherein acquiring, according to the contention resolution configuration information, the contention resolution acknowledgment message fed back by the second node, comprises:
receiving the contention resolution acknowledgment message on a resource configuration corresponding to the contention resolution configuration information, wherein the contention resolution acknowledgment message comprises one of the following: indication information allowing the first node to send the sensing signal, and indication information not allowing the first node to send the sensing signal.

8. The method according to claim 7, wherein
in a case where the sensing configuration information only comprises the sensing request configuration information, the sensing request further carries the contention resolution configuration information expected by the first node;
in cases where the sensing configuration information only comprises the sensing request configuration information and where the contention resolution acknowledgment message carries indication information allowing the first node to transmit the sensing signal, the contention resolution acknowledgment message further carries the sensing signal configuration information allocated to the first node by the second node during contention resolution.

9. The method according to claim 7, wherein
in a case where the sensing configuration information only comprises the sensing request configuration information, the sensing request further carries the contention resolution configuration information and the sensing signal configuration information which are expected by the first node.

10. The method according to claim 7, wherein
in a case where the sensing configuration information only comprises the sensing request configuration information and the contention resolution configuration information, the sensing request further carries the sensing signal configuration information expected by the first node.

11. The method according to claim 7, wherein
in cases where the sensing configuration information only comprises the sensing request configuration information and the contention resolution configuration information, and where the contention resolution acknowledgment message carries indication information allowing the first node to send the sensing signal, the contention resolution acknowledgment message further carries the sensing signal configuration information allocated to the first node by the second node during contention resolution.

12. The method according to claim 2, wherein the broadcast configuration information comprises at least one of:
a time-domain configuration of the broadcast message, comprising: a repetition period, a slot index within a frame or subframe, a starting symbol, and number of symbols;
a frequency-domain configuration of the broadcast message, comprising: a starting resource block index and number of resource blocks;
a code-domain configuration of the broadcast message, comprising: a reference signal code-domain index and a data signal code-domain index;
a spatial-domain configuration of the broadcast message, comprising: a beam index and a partition region index;
a sensing service type information configuration, comprising: high time-domain occupancy, high frequency-domain occupancy and/or high spatial-domain occupancy;
a sensing signal type information configuration, comprising: orthogonal frequency division multiplexing (OFDM), orthogonal time-frequency space (OTFS) and/or frequency modulation continuous wave (FMCW);
an environment condition reporting configuration, comprising: reporting a signal to interference plus noise ratio (SINR), reporting reference signal received power (RSRP) and/or reporting GPS.

13. The method according to any one of claims 3 to 11, wherein the sensing configuration comprises a time-domain configuration and a frequency-domain configuration, wherein
the time-domain configuration comprises a time-domain offset, a starting symbol, and number of symbols; and
the frequency-domain configuration comprises a start resource block index and number of resource blocks.

14. The method according to claim 13, wherein the sensing configuration further comprises a code-domain configuration, wherein the code-domain configuration comprises a code-domain index.

15. The method according to claim 14, wherein the sensing request configuration information comprises:
a time-domain configuration of the sensing request, comprising: a first time-domain offset Tr relative to a broadcast message, a starting symbol of the sensing request, and the number of symbols of the sensing request;
a frequency-domain configuration of the sensing request, comprising: a starting resource block index of the sensing request, and the number of resource blocks of the sensing request;
a code-domain configuration of the sensing request, comprising a code-domain index random selection list or a code-domain index logic selection list.

16. The method according to claim 15, wherein after selecting, on the basis of a sensing capability of the first node, one piece of the sensing configuration information from the sensing configuration, the method further comprises:
randomly selecting one code-domain index from the code-domain index random selection list as the code-domain index of the first node; or,
looking up, on the basis of the signal quality of the broadcast message, a corresponding code-domain index from the code-domain index logic selection list as the code-domain index of the first node.

17. The method according to claim 13, wherein the contention resolution configuration information comprises:
a time-domain configuration of the contention resolution acknowledgment message, comprising: a second time-domain offset TAN relative to the sensing request, a starting symbol of the contention resolution acknowledgment message, and the number of symbols of the contention resolution acknowledgment message;
a frequency-domain configuration of the contention resolution acknowledgment message, comprising: a starting resource block index of the contention resolution acknowledgment message, and the number of resource blocks of the contention resolution acknowledgment message;
a code-domain configuration of the contention resolution acknowledgment message, comprising: a code-domain index of a reference signal of the contention resolution acknowledgment message, and a code-domain index of a data signal of the contention resolution acknowledgment message.

18. The method according to claim 13, wherein the sensing signal configuration information comprises:
a time-domain configuration of the sensing signal, comprising: a third time-domain offset T_{S} relative to the contention resolution acknowledgment message, a starting symbol of the sensing signal, the number of symbols of the sensing signal, a starting slot index of the sensing signal, the number of slots of the sensing signal, and the number of slot repetitions of the sensing signal;
a frequency-domain configuration of the sensing signal, comprising: a starting resource block index of the sensing signal, the number of resource blocks of the sensing signal, and an effective sensing bandwidth of the sensing signal; and
a code-domain configuration of the sensing signal, comprising: a code-domain index of the sensing signal.

19. The method according to claim 18, wherein the time-domain configuration of the sensing signal further comprises at least one of the following: a symbol duty cycle of the sensing signal, the number of symbol repetitions of the sensing signal, a slot duty cycle of the sensing signal, a length of the sensing signal, and a time-domain sampling duty cycle of the sensing signal.

20. The method according to claim 13, wherein the sensing configuration further comprises classification information and/or condition information, wherein
the classification information comprises at least one of a sensing signal type, a service type and an architecture type; and
the condition information comprises at least one of a terminal capability, a terminal location and a signal strength.

21. The method according to claim 14, wherein the sensing configuration further comprises a spatial-domain configuration, wherein the spatial-domain configuration is used in cooperation with the time-domain configuration, the frequency-domain configuration and the code-domain configuration, and the spatial-domain configuration comprises a broadcast beam index and a partition region index.

22. The method according to claim 1, wherein the sensing request carries capability information of the first node and/or GPS position information of the first node.

23. A sensing service management method, applied to a second node, the method comprising:
sending sensing configuration information by means of broadcasting;
receiving a sensing request that is sent by at least one first node after receiving the sensing configuration information;
performing contention resolution according to the sensing request of the at least one first node, and respectively sending the contention resolution acknowledgment message to the at least one first node according to a contention resolution result; and
receiving a sensing signal sent by one or more first nodes, wherein the sensing signal is sent to the second node by the first node upon reception of a contention resolution acknowledgment message comprising indication information allowing the first node to send the sensing signal.

24. The method according to claim 23, wherein sending the sensing configuration information by means of broadcasting comprises:
modulating a sensing configuration of the second node to obtain a broadcast message, wherein the sensing configuration comprises at least one piece of the sensing configuration information; and
broadcasting the broadcast message based on pre-configured broadcast configuration information.

25. The method according to claim 24, wherein the sensing configuration information comprises one of:
sensing request configuration information which is used for instructing the first node to send the sensing request on a corresponding resource configuration;
the sensing request configuration information and contention resolution configuration information, wherein the contention resolution configuration information is used for instructing the first node to receive the contention resolution acknowledgment message on a corresponding resource configuration;
the sensing request configuration information, the contention resolution configuration information and sensing signal configuration information, wherein the sensing signal configuration information is used for instructing the first node to send the sensing signal on a corresponding resource configuration;
wherein within the same piece of the sensing configuration information, there is a mapping relationship between the sensing request configuration information, the contention resolution configuration information and the sensing signal configuration information.

26. The method according to claim 25, wherein receiving a sensing request that is sent by at least one first node after receiving the sensing configuration information comprises:
receiving, on a resource configuration corresponding to the sensing request configuration information, the sensing request sent by the at least one first node after receiving the sensing configuration information, wherein the sensing request is used for requesting the second node to allow the first node to send the sensing signal.

27. The method according to claim 26, wherein
in a case where the sensing configuration information only comprises the sensing request configuration information, the sensing request further carries the contention resolution configuration information expected by the first node; or,
in a case where the sensing configuration information only comprises the sensing request configuration information, the sensing request further carries the contention resolution configuration information and the sensing signal configuration information which are expected by the first node; or,
in a case where the sensing configuration information only comprises the sensing request configuration information and the contention resolution configuration information, the sensing request further carries the sensing signal configuration information expected by the first node.

28. The method according to claim 27, wherein performing contention resolution according to the sensing request of the at least one first node, comprises:
in a case where the sensing requests of the plurality of first nodes select the same sensing configuration information, allowing, by means of contention resolution, only one first node to send the sensing signal using the sensing configuration information; and
in a case where the sensing requests of the plurality of first nodes select different pieces of sensing configuration information, allowing the plurality of first nodes to respectively send the sensing signal using the corresponding sensing configuration information.

29. The method according to claim 28, wherein respectively sending the contention resolution acknowledgment message to the at least one first node according to a contention resolution result, comprises:
respectively sending the contention resolution acknowledgment message to a corresponding first node on a resource configuration corresponding to the contention resolution configuration information, wherein the contention resolution acknowledgment message comprises one of the following: indication information allowing the first node to send the sensing signal, and indication information not allowing the first node to send the sensing signal.

30. The method according to claim 25, wherein performing contention resolution according to the sensing request of the at least one first node further comprises:
in a case where the sensing configuration information only comprises the sensing request configuration information, allocating the sensing signal configuration information to the first node by means of contention solution; or,
in a case where the sensing configuration information only comprises the sensing request configuration information and the contention resolution configuration information, allocating the sensing signal configuration information to the first node by means of contention resolution.

31. The method according to claim 25, wherein receiving sensing signals sent by one or more first nodes comprises:
receiving, on a resource configuration corresponding to the sensing signal configuration information, the sensing signal sent by the corresponding first node, wherein the sensing signal configuration information used by each first node is different.

32. A terminal, configured to perform sensing service management according to the method of any one of claims 1 to 22.

33. A base station, the base station performing sensing service management according to the method of any one of claims 23 to 31.

34. A computer readable storage medium storing a computer program, wherein the computer program is configured to, when being executed by the processor, cause the processor to perform the method according to any one of claims 1 to 22, or 23 to 31.

35. An electronic device, comprising a memory and a processor, wherein the memory stores a computer program, and the processor is configured to execute the computer program to perform the method according to any one of claims 1 to 22, or 23 to 31.
